(19) Europäisches Patentamt / European Patent Office / Office européen des brevets

(11) **EP 4 417 722 A1**

(12) **EUROPEAN PATENT APPLICATION**
published in accordance with Art. 153(4) EPC

(43) Date of publication:
**21.08.2024 Bulletin 2024/34**

(21) Application number: **22881041.2**

(22) Date of filing: **12.10.2022**

(51) International Patent Classification (IPC):
**C22C 9/00** *(2006.01)*   **C22F 1/00** *(2006.01)*
**C22F 1/08** *(2006.01)*

(52) Cooperative Patent Classification (CPC):
**C22C 9/00; C22F 1/00; C22F 1/08**

(86) International application number:
**PCT/JP2022/038028**

(87) International publication number:
**WO 2023/063346 (20.04.2023 Gazette 2023/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.10.2021 JP 2021167385**

(71) Applicant: **Mitsubishi Materials Corporation Tokyo 100-8117 (JP)**

(72) Inventors:
• **KOBAYASHI Takanori**
  **Aizuwakamatsu-shi, Fukushima 965-8522 (JP)**
• **FUNAKI Shinichi**
  **Aizuwakamatsu-shi, Fukushima 965-8522 (JP)**
• **MAKI Kazunari**
  **Kitamoto-shi, Saitama 364-0028 (JP)**
• **ITO Yuki**
  **Kitamoto-shi, Saitama 364-0028 (JP)**
• **INOUE Yuki**
  **Kitamoto-shi, Saitama 364-0028 (JP)**

(74) Representative: **Hoffmann Eitle Patent- und Rechtsanwälte PartmbB Arabellastraße 30 81925 München (DE)**

(54) **COPPER ALLOY, COPPER ALLOY PLASTIC PROCESSING MATERIAL, COMPONENT FOR ELECTRONIC/ELECTRICAL DEVICE, TERMINAL, BUS BAR, AND LEAD FRAME**

(57)   This copper alloy has a composition containing Mg in an amount of 0.10 mass% or greater and 2.6 mass% or less, with a balance being Cu and inevitable impurities, in which in a plastic deformation region of a stress-strain curve obtained in a low-speed tensile test at a strain rate of $1.0 \times 10^{-6}$/s, an average value of a period of a strain of a saw edge-shaped curve is 0.01% or greater and 1.0% or less, an average value of a difference in level of stress of the saw edge-shaped curve is 0.1 MPa or greater and 2 MPa or less, and there are five or more saw edge-shaped curves with a period of strain of 0.01% or greater and 1.0% or less and a difference in the level of stress of 0.1 MPa or greater and 2 MPa or less.

EP 4 417 722 A1

**Description**

[Technical Field]

The present invention relates to a copper alloy suitable for a component for an electronic/electrical device, such as a terminal, a bus bar, or a lead frame, and a copper alloy plastically-worked material (copper alloy plastic processing material) formed of this copper alloy, a component for an electronic/electrical device, a terminal, a bus bar, and a lead frame.

The present application claims priority on Japanese Patent Application No. 2021-167385 filed on October 12, 2021, the content of which is incorporated herein by reference.

[Background Art]

In the related art, in components for electronic/electrical devices such as a terminal, a bus bar, and a lead frame, copper or a copper alloy with excellent electrical conductivity has been used.

Recently, with regard to electronic devices, electrical devices, and the like, the devices may be used in high temperature environments such as engine rooms of automobiles, and in addition, a large current tends to be applied thereto.

In order to deal with a large current, a pure copper material such as oxygen-free copper having excellent electrical conductivity is applied to the above-mentioned components for electronic/electrical devices. However, a pure copper material has a problem that the material has inferior stress relaxation resistance characteristics, which represents the degree of elasticity deterioration of a spring caused by heat, and cannot be stably used in a high-temperature environment.

In addition, a terminal, particularly a female terminal, has a spring for maintaining connection with a male terminal, and when the terminal is used in a high-temperature environment, there is a risk that elasticity deterioration may occur due to a creep phenomenon, and connection reliability may be deteriorated. Therefore, a spring is required to have stress relaxation resistance characteristics that show difficulty in elasticity deterioration.

However, the stress relaxation resistance characteristics have a trade-off relationship with strength, and it has been difficult to achieve both.

Thus, Patent Document 1 discloses a rolled copper sheet including 0.005 mass% or greater and less than 0.1 mass% of Mg.

The rolled copper sheet described in Patent Document 1 has a composition including 0.005 mass% or greater and less than 0.1 mass% of Mg, with the balance being Cu and inevitable impurities, and therefore, the strength and the stress relaxation resistance characteristics can be improved without greatly decreasing the electrical conductivity, by solid-solutionizing Mg into the matrix of copper.

Recently, size reduction of members used in the above-described components for electronic/electrical devices has been in progress, and a copper material to be used therein is required to have both higher strength and higher bendability with the same sheet thickness. Since strength and bendability have a trade-off relationship, it has been difficult to achieve both.

In addition, the above-described components for electronic/electrical devices are used in more severe high-temperature environments than in the related art, and further improvement of strength and stress relaxation resistance characteristics is required.

[Citation List]

[Patent Document]

[Patent Document 1]
Japanese Unexamined Patent Application, First Publication No. 2016-056414

[Summary of Invention]

[Technical Problem]

This invention has been made in view of the above-described circumstances, and an object of the present invention is to provide a copper alloy having high strength and excellent stress relaxation resistance characteristics and also having excellent bendability, a copper alloy plastically-worked material, a component for an electronic/electrical device, a terminal, a bus bar, and a lead frame.

[Solution to Problem]

The inventors of the present invention conducted intensive studies in order to achieve this object, and as a result, the inventors obtained the following findings.

It is possible to improve the stress relaxation resistance characteristics while maintaining strength, by utilizing Mg, which is an additive element, to form Cottrell atmosphere and promoting stabilization of dislocations. Furthermore, by stably arranging dislocations, stress concentration is avoided; and as a result, elongation is improved.

Then, in a case where dislocations are stabilized by Mg, when a low-speed tensile test is performed, a saw edge-shaped curve (serration) is generated in the plastic deformation region of a stress-strain curve.

The present invention has been made based on the above-described findings, and an aspect of the present invention has the following configurations.

[1] A copper alloy having a composition containing Mg in an amount of 0.10 mass% or greater and 2.6 mass% or less, with a balance being Cu and inevitable impurities,

in which in a plastic deformation region of a stress-strain curve obtained in a low-speed tensile test at a strain rate of $1.0 \times 10^{-6}$/s, an average value of a period of a strain of a saw edge-shaped curve is 0.01% or greater and 1.0% or less, an average value of a difference in level of stress of the saw edge-shaped curve is 0.1 MPa or greater and 2 MPa or less, and there are five or more saw edge-shaped curves with a period of strain of 0.01 % or greater and 1.0% or less and a difference in the level of stress of 0.1 MPa or greater and 2 MPa or less.

According to the copper alloy having this configuration, the copper alloy contains Mg in the above-described amount, and in the plastic deformation region of a stress-strain curve obtained in a low-speed tensile test at a strain rate of $1.0 \times 10^{-6}$/s, an average value of the period of a strain of a saw edge-shaped curve is 0.01% or greater and 1.0% or less, an average value of the difference in the level of stress of the saw edge-shaped curve is 0.1 MPa or greater and 2 MPa or less, and there are five or more saw edge-shaped curves with a period of strain of 0.01% or greater and 1.0% or less and a difference in the level of stress of 0.1 MPa or greater and 2 MPa or less. Therefore, dislocations are stabilized by Mg, and the stress relaxation resistance characteristics can be improved while maintaining strength. In addition, elongation can be improved, and bendability can be improved.

[2] The copper alloy according to [1], in which when a measurement area of 1000 $\mu$m$^2$ or greater is measured by an EBSD method at a measurement interval of 0.1 $\mu$m step, measurement points at which a CI value analyzed by data analysis software OIM is 0.1 or less are excluded, and analysis is performed, an aspect ratio b/a represented by a major axis a and a minor axis b of a crystal grain size (including twin crystals) is 0.95 or less.

In this case, since the aspect ratio b/a represented by the major axis a and the minor axis b of the crystal grain size (including twin crystals) is 0.95 or less, dislocations have been sufficiently introduced by working, and as these dislocations are stabilized by Mg, the stress relaxation resistance characteristics can be further improved while maintaining strength, and at the same time, elongation can be improved, while bendability can be further improved.

[3] The copper alloy according to [1] or [2], in which a tensile strength is 350 MPa or greater.

In this case, since the tensile strength is 350 MPa or greater, the copper alloy is not easily deformed and is particularly suitable as a copper alloy for a component for an electronic/electrical device, such as a terminal of a connector, a press fit, or the like, a relay, a lead frame, or a bus bar.

[4] The copper alloy according to any one of [1] to [3], in which when an amount of Mg is designated as A atom%, electrical conductivity $\sigma$ (%IACS) satisfies the following relational expression,

$$\sigma \leq 1.7680 / (-0.0200 \times A^2 + 0.5769 \times A + 1.7) \times 100.$$

In this case, since the electrical conductivity $\sigma$ is specified as described above, the added Mg sufficiently forms solid-solutions in the copper matrix, and the generation of precipitates including Mg is suppressed. Therefore, bendability can be further improved.

[5] The copper alloy according to any one of [1] to [4], in which the composition further contains P in an amount of 0.0005 mass% or greater and 0.1 mass% or less.

In this case, since the amount of P is 0.0005 mass% or greater, it is possible to improve the castability. In addition, since the amount of P is 0.1 mass% or less, even in a case where P is added, a significant decrease in the electrical conductivity can be suppressed.

[6] The copper alloy according to [5], in which when an amount of Mg is designated as A atom%, an amount of P is designated as B atom%, and an Mg equivalent Ax is expressed as $A_X = (A - 1.5 \times B)$, electrical conductivity $\sigma$ (%IACS) satisfies the following relational expression,

$$\sigma \leq 1.7680 / (-0.0200 \times A_X^2 + 0.5769 \times A_X + 1.7) \times 100.$$

In a case where Mg and P are added together, $Mg_3P_2$ is generated in the matrix; and therefore, when evaluating the degree of solid solubility of Mg, it is necessary to specify the electrical conductivity not with the amount of Mg but with the Mg equivalent $A_X$ which is $A_X = (A - 1.5 \times B)$.

In addition, since the electrical conductivity $\sigma$ is specified as described above by using the Mg equivalent Ax, the added Mg sufficiently forms solid-solutions in the copper matrix, and generation of precipitates including Mg is suppressed. Therefore, bendability can be further improved.

[7] A copper alloy plastically-worked material, including the copper alloy according to any one of [1] to [6].

According to the copper alloy plastically-worked material with this configuration, since the copper alloy plastically-worked material is formed of the above-described copper alloy, the copper alloy plastically-worked material is excellent in terms of strength, stress relaxation resistance characteristics, and bendability and is particularly suitable as a material of a component for an electronic/electrical device, such as a terminal, a bus bar, or a lead frame, all of which are used for high-current applications in a high-temperature environment.

[8] The copper alloy plastically-worked material according to [7], in which the copper alloy plastically-worked material is a rolled sheet having a thickness within a range of 0.1 mm or greater and 10 mm or less.

In this case, since the copper alloy plastically-worked material is a rolled sheet having a thickness within the range of 0.1 mm or greater and 10 mm or less, a component for an electronic/electrical device, such as a terminal, a bus bar, or a lead frame, can be molded by subjecting this copper alloy plastically-worked material (rolled sheet) to punching working or bending working.

[9] The copper alloy plastically-worked material according to [7] or [8], in which the copper alloy plastically-worked material includes a metal plating layer on a surface.

In this case, since the copper alloy plastically-worked material includes a metal plating layer on the surface, the copper alloy plastically-worked material is particularly suitable as a material of a component for an electronic/electrical device, such as a terminal, a bus bar, or a lead frame.

Examples of the metal plating layer include Sn plating, Ag plating, Ni plating, Au plating, Pd plating, and Rh plating. In addition, in an aspect of the present invention, the "Sn plating" includes pure Sn plating or Sn alloy plating, the "Ag plating" includes pure Ag plating or Ag alloy plating, the "Ni plating" includes pure Ni plating or Ni alloy plating, the "Au plating" includes pure Au plating or Au alloy plating, the "Pd plating" includes pure Pd plating or Pd alloy plating, and the "Rh plating" includes pure Rh plating or Rh alloy plating.

The copper alloy plastically-worked material according to any one of [7] to [9], in which the copper alloy plastically-worked material is a rolled material that has been rolled, and when a measurement area of 1000 $\mu m^2$ or greater is measured on an RD surface by an EBSD method at a measurement interval of 0.1 $\mu m$ step, measurement points at which a CI value analyzed by data analysis software OIM is 0.1 or less are excluded, and analysis is performed, an aspect ratio b/a represented by a major axis a and a minor axis b of a crystal grain size (including twin crystals) is 0.95 or less.

In this case, since the aspect ratio b/a represented by the major axis a and the minor axis b of the crystal grain size (including twin crystals) is 0.95 or less, dislocations are sufficiently introduced by rolling, and as these dislocations are stabilized by Mg, the stress relaxation resistance characteristics can be further improved while maintaining strength. At the same time, elongation can be further improved, while bendability can be further improved.

A component for an electronic/electrical device, including the copper alloy plastically-worked material according to any one of [7] to [9] and [9a]. Examples of the component for an electronic/electrical device according to an aspect of the present invention include a terminal, a bus bar, and a lead frame.

Since the component for an electronic/electrical device with this configuration is produced by using the above-described copper alloy plastically-worked material, the component can exhibit excellent characteristics even in a high-temperature environment.

[11] A terminal, including the copper alloy plastically-worked material according to any one of [7] to [9] and [9a].

Since the terminal with this configuration is produced by using the above-described copper alloy plastically-worked material, the terminal can exhibit excellent characteristics even in a high-temperature environment.

[12] A bus bar, including the copper alloy plastically-worked material according to any one of [7] to [9] and [9a].

Since the bus bar with this configuration is produced by using the above-described copper alloy plastically-worked material, the bus bar can exhibit excellent characteristics even in a high-temperature environment.

[13] A lead frame, including the copper alloy plastically-worked material according to any one of [7] to [9] and [9a].

Since the lead frame with this configuration is produced by using the above-described copper alloy plastically-worked material, the lead frame can exhibit excellent characteristics even in a high-temperature environment.

[Advantageous Effects of Invention]

According to an aspect of the present invention, it is possible to provide a copper alloy having high strength and excellent stress relaxation resistance characteristics and also having excellent bendability, a copper alloy plastically-worked material, a component for an electronic/electrical device, a terminal, a bus bar, and a lead frame.

[Brief Description of Drawings]

FIG. 1A is a stress-strain curve obtained by a low-speed tensile test for a copper alloy of the present embodiment.
FIG. 1B is an enlarged view of region X in FIG. 1A.
FIG. 2 is a flow chart showing a method of producing the copper alloy according to the present embodiment.

[Description of Embodiments]

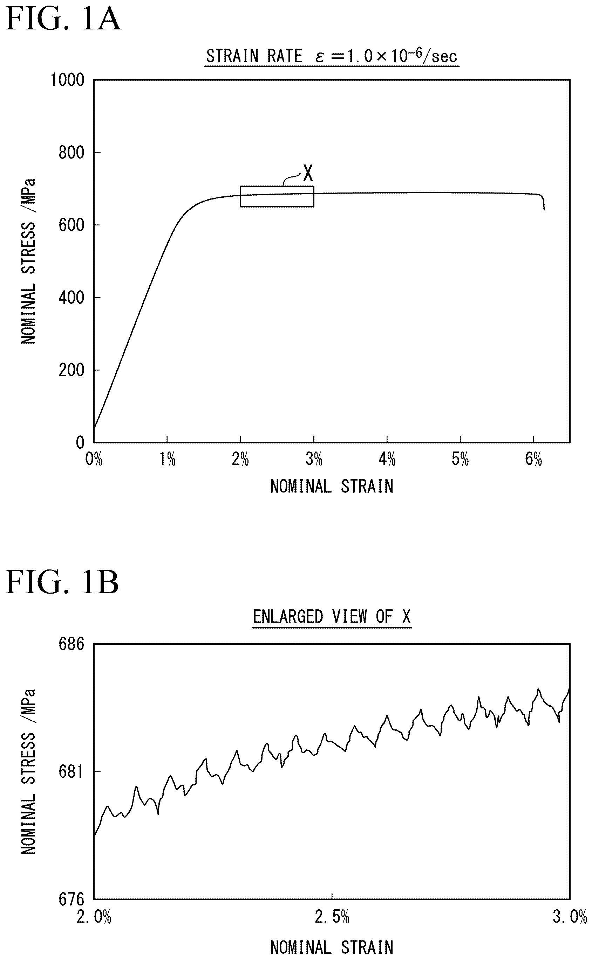

Hereinafter, a copper alloy according to an embodiment of the present invention will be described.
The copper alloy according to the present embodiment has a composition containing Mg in an amount of 0.10 mass% or greater and 2.6 mass% or less, with the balance being Cu and inevitable impurities.
The copper alloy according to the present embodiment may further contain P in an amount of 0.0005 mass% or greater and 0.1 mass% or less.
With regard to the copper alloy according to the present embodiment, in the plastic deformation region of a stress-strain curve obtained in a low-speed tensile test at a strain rate of $1.0 \times 10^{-6}$/s, an average value of the period of strain of a saw edge-shaped curve (serration) is 0.01% or greater and 1.0% or less, and an average value of the difference in the level of stress of the saw edge-shaped curve is 0.1 MPa or greater and 2 MPa or less. Furthermore, in the plastic deformation region of the stress-strain curve, there are five or more saw edge-shaped curves with a period of strain of 0.01% or greater and 1.0% or less and a difference in the level of stress of 0.1 MPa or greater and 2 MPa or less.
Examples of a stress-strain curve obtained in a low-speed tensile test at a strain rate of $1.0 \times 10^{-6}$/s for the copper alloy according to the present embodiment are shown in FIG. 1A and FIG. 1B. As shown in FIG. 1A and FIG. 1B, since stress increases and decreases periodically as the strain increases in the plastic deformation region, a saw edge-shaped curve (serration) is formed.
In addition, with regard to the copper alloy according to the present embodiment, when a measurement area of 1000 $\mu m^2$ or greater is measured by an EBSD method at a measurement interval of 0.1 $\mu m$ step, measurement points at which a CI value analyzed by data analysis software OIM is 0.1 or less are excluded, and analysis is performed, it is preferable that an aspect ratio b/a represented by the major axis a and the minor axis b of the crystal grain size (including twin crystals) is 0.95 or less.
In addition, with regard to the copper alloy according to the present embodiment, it is preferable that the tensile strength is 350 MPa or greater.
In addition, with regard to the copper alloy according to the present embodiment, when the amount of Mg is designated as A atom%, it is preferable that the electrical conductivity $\sigma$ (%IACS) satisfies the following relational expression.

$$\sigma \leq 1.7680 / (-0.0200 \times A^2 + 0.5769 \times A + 1.7) \times 100.$$

Furthermore, with regard to the copper alloy according to the present embodiment, in a case where the copper alloy includes P together with Mg, when the amount of Mg is designated as A atom%, the amount of P is designated as B atom%, and the Mg equivalent Ax is expressed as Ax = (A - 1.5 $\times$ B), it is preferable that the electrical conductivity $\sigma$ (%IACS) satisfies the following relational expression.

$$\sigma \leq 1.7680 / (-0.0200 \times A_X^2 + 0.5769 \times A_X + 1.7) \times 100.$$

With regard to the copper alloy according to the present embodiment, the reasons for specifying the component composition, various characteristics, and the crystal texture as described above will be described below.

(Mg)

Mg is an element having an action and effect of improving the stress relaxation resistance characteristics without significantly decreasing the electrical conductivity, by forming solid solutions into the matrix of copper. In addition, by forming a Cottrell atmosphere by utilizing Mg and stabilizing dislocations, it is possible to promote improvement of the strength, stress relaxation resistance characteristics, and elongation.

In a case where the amount of Mg is less than 0.10 mass%, there is a concern that the action and effect of Mg may not be sufficiently successfully achieved. On the other hand, in a case where the amount of Mg is greater than 2.6 mass%, an increase in cost due to an increase in the production load, and a decrease in yield may be brought about. Therefore, the copper alloy is not suitable as an industrial product.

As described above, in the present embodiment, the amount of Mg is set to be in the range of 0.10 mass% or greater and 2.6 mass% or less.

In order to further improve the strength, stress relaxation resistance characteristics, and elongation, it is preferable that the lower limit of the amount of Mg is 0.12 mass% or greater, more preferably 0.15 mass% or greater, and even more preferably 0.17 mass% or greater.

Furthermore, in order to further suppress an increase in the production cost and a decrease in yield, it is preferable that the upper limit of the amount of Mg is less than 2.5 mass%, more preferably less than 2.4 mass%, and even more preferably less than 2.3 mass%.

(P)

With regard to the copper alloy according to the present embodiment, in a case where the copper alloy contains 0.0005 mass% or greater of P, the molten metal flowability is improved, and castability is improved. On the other hand, by limiting the amount of P to 0.1 mass% or less, it is possible to suppress the electrical conductivity from significantly decreasing.

With regard to the copper alloy of the present embodiment, in order to further improve castability, it is more preferable that the lower limit of the amount of P is 0.0006 mass% or greater, and even more preferably 0.0007 mass% or greater. Furthermore, in order to further suppress a decrease in the electrical conductivity, it is more preferable that the upper limit of the amount of P is 0.095 mass% or less, and even more preferably 0.092 mass% or less.

With regard to the copper alloy according to the present embodiment, in a case where the copper alloy contains P as an impurity, the copper alloy may contain less than 0.0005 mass% of P.

(Other Inevitable Impurities)

Examples of other inevitable impurities other than the above-described elements include Ag, Al, B, Ba, Be, Ca, Cd, Cr, Sc, rare earth elements, V, Nb, Ta, Mo, Ni, W, Mn, Re, Ru, Sr, Ti, Os, Co, Rh, Ir, Pb, Pd, Pt, Au, Zn, Zr, Hf, Hg, Ga, In, Ge, Y, Tl, N, Si, Sn, Li, S, Se, Te, Sb, Bi, and As. These inevitable impurities may be contained to the extent that does not affect the characteristics.

Since there is a concern that these inevitable impurities may decrease the electrical conductivity, it is preferable that the total amount of the inevitable impurities is 0.1 mass% or less, more preferably 0.05 mass% or less, even more preferably 0.03 mass% or less, and still more preferably 0.01 mass% or less.

In addition, it is preferable that the upper limit of the amount of each of the inevitable impurities is 10 mass ppm or less, more preferably 5 mass ppm or less, and even more preferably 2 mass ppm or less.

(Stress-Strain Curve obtained in Low-Speed Tensile Test)

With regard to the copper alloy according to the present embodiment, as described above, the stress relaxation resistance characteristics are improved while maintaining strength, by utilizing Mg to form a Cottrell atmosphere and promoting stabilization of dislocations.

In a case where a low-speed tensile test with a strain rate of $1.0 \times 10^{-6}$/s is performed, when a dislocation stabilized by Mg is crossed over by another dislocation, a change in stress occurs, and a saw edge-shaped curve (serration) is developed in the stress-strain curve.

In the present embodiment, with regard to the stress-strain curve obtained in the above-described low-speed tensile test, a region in which the stress is 0.2% yield strength $\sigma_{0.2}$ or greater is defined as a plastic deformation region. In this plastic deformation region, when the following requirements (1) and (2) are satisfied, it is considered that there is a saw edge-shaped curve (serration) as specified in the present embodiment. As a result, the saw edge-shaped curve can be distinguished from the noise generated in the test facility and sudden fluctuations caused by an external factor.

(1) The average value of the period of strain of the saw edge-shaped curve is 0.01% or greater and 1.0% or less, and the average value of the difference in the level of stress of the saw edge-shaped curve is 0.1 MPa or greater and 2 MPa or less.

(2) There are five or more saw edge-shaped curves with a period of strain of 0.01% or greater and 1.0% or less and a difference in the level of stress of 0.1 MPa or greater and 2 MPa or less.

In the stress-strain curve, a curve from a minimum point A of one stress to a minimum point B of another stress adjacent to the minimum point A of the stress in the periodic fluctuations of stress is one saw edge-shaped curve (however, the minimum point B is not included). In one saw edge-shaped curve, there are one minimum point (valley portion) of stress and one maximum point (peak portion) of stress. The period of strain is the difference between the strains at two adjacent minimum points (valley portions) of stress. The difference in the level of stress is a difference between the stresses at a maximum point (peak portion) and a minimum point (valley portion) of stress in one saw edge-shaped curve.

The average value of the period of strain is the average value of the periods of strain in all the saw edge-shaped curves in the plastic deformation region, and the average value of the difference in the level of stress is the average value of the differences in the level of stress in all the saw edge-shaped curves in the plastic deformation region.

The average value of the period of strain is preferably 0.95% or less, and more preferably 0.90% or less. In addition, the average value of the period of strain is preferably 0.02% or greater, and more preferably 0.03% or greater. The average value of the difference in the level of stress is preferably 1.90 MPa or less, and more preferably 1.80 MPa or less. In addition, the average value of the difference in the level of stress is preferably 0.10 MPa or greater.

(Aspect Ratio b/a)

With regard to the copper alloy according to the present embodiment, as described above, since the improvement of strength, stress relaxation resistance characteristics, and elongation is promoted by promoting the stabilization of dislocations by Mg, it is preferable that the copper alloy has sufficient dislocations.

In a case of forming crystal grains in which an aspect ratio b/a represented by the major axis a and the minor axis b of crystal grains (including twin crystals) is 0.95 or less, dislocations are sufficiently present, and it is possible to promote further improvement of strength, stress relaxation resistance characteristics, and elongation. When the aspect ratio b/a is greater than 0.95, the copper alloy does not have sufficient dislocations, and stabilization of dislocations by Mg cannot be obtained.

In the present embodiment, the aspect ratio b/a represented by the major axis a and the minor axis b of the crystal grains (including twin crystals) is more preferably 0.93 or less, and even more preferably 0.90 or less. In addition, the aspect ratio b/a is preferably 0.005 or greater, and more preferably 0.01 or greater.

With regard to the copper alloy according to the present embodiment, when a measurement area of 1000 $\mu m^2$ or greater is measured by an EBSD method at a measurement interval of 0.1 $\mu m$ step, subsequently measurement points at which a CI value analyzed by data analysis software OIM is 0.1 or less are excluded, and analysis is performed, the aspect ratio b/a represented by the major axis a and the minor axis b of the crystal grain size (including twin crystals) is 0.95 or less.

(Tensile Strength)

With regard to the copper alloy according to the present embodiment, in a case where the tensile strength is 350 MPa or greater, strength is sufficiently secured, and the copper alloy is particularly suitable as a material of a component for an electronic/electrical device, such as a terminal, a bus bar, or a lead frame. The tensile strength according to the present embodiment is tensile strength in a direction parallel to the rolling direction.

In the present embodiment, the above-described tensile strength is more preferably 360 MPa or greater, and even more preferably 370 MPa or greater. Furthermore, in the present embodiment, the upper limit of the tensile strength (tensile strength in a direction parallel to the rolling direction) is not defined; however, in order to avoid a decrease in productivity caused by improper winding of coil at the time of using a coil-wound strip material, it is preferable that the tensile strength is 2000 MPa or less. The tensile strength is more preferably 1700 MPa or less, and still more preferably 1500 MPa or less.

(Electrical Conductivity)

With regard to the copper alloy of the present embodiment, in a case where Mg sufficiently forms solid-solutions, the generation of precipitates of Mg can be suppressed, and it is possible to further improve bendability.

When the amount of Mg is designated as A atom%, as the electrical conductivity $\sigma$ (%IACS) satisfies the

following relational expression, Mg sufficiently forms solid-solutions in the copper matrix, and bendability can be further improved.

$$\sigma \leq 1.7680 / (-0.0200 \times A^2 + 0.5769 \times A + 1.7) \times 100.$$

Furthermore, with regard to the copper alloy according to the present embodiment, in a case where the copper alloy includes P together with Mg, $Mg_3P_2$ is generated in the matrix, and therefore, when evaluating the degree of solid solubility of Mg, it is necessary to specify the electrical conductivity not with the amount of Mg but with the Mg equivalent $Ax = (A - 1.5 \times B)$.

Thus, when the amount of Mg is designated as A atom%, the amount of P is designated as B atom%, and the Mg equivalent $A_X$ is represented by $A_X = (A - 1.5 \times B)$, as the electrical conductivity $\sigma$ (%IACS) satisfies the following relational expression, Mg sufficiently forms solid-solutions in the copper matrix, and bendability can be further improved.

$$\sigma \leq 1.7680 / (-0.0200 \times A_X^2 + 0.5769 \times A_X + 1.7) \times 100.$$

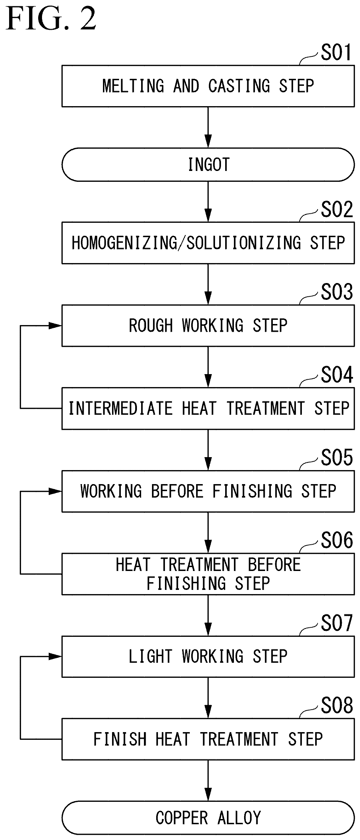

Next, a method of producing the copper alloy according to the present embodiment with such a configuration will be described with reference to the flow chart shown in FIG. 2.

(Melting and Casting Step S01)

First, the above-described elements are added to molten copper obtained by melting a copper raw material to adjust components, and a molten copper alloy is produced. For the addition of various elements, a simple element, a mother alloy, and the like can be used. In addition, raw materials including the above-described elements may be melted together with the copper raw material. Furthermore, a recycled material and a scrap material of the present alloy may be used. As the molten copper, so-called 4NCu having a purity of 99.99 mass% or greater or so-called 5NCu having a purity of 99.999 mass% or greater is preferably used.

In the melting step, in order to suppress oxidation of Mg and to lower the hydrogen concentration, it is preferable to perform atmosphere melting using an inert gas atmosphere (for example, Ar gas) with a low vapor pressure of $H_2O$, and it is preferable to set the holding time at the time of melting to the minimum.

The molten copper alloy in which the components have been adjusted is poured into a mold to produce an ingot. In the case of taking mass production into consideration, it is preferable to use a continuous casting method or a semi-continuous casting method.

At this time, since a crystallized material including Mg and P is formed at the time of solidification of the molten metal, it is possible to make the size of the crystallized material finer by increasing the solidification rate. Therefore, it is preferable that the cooling rate for the molten metal is 0.1°C/sec or greater, more preferably 0.5°C/sec or greater, and most preferably 1°C/sec or greater.

(Homogenizing/Solutionizing Step S02)

Next, a heating treatment is performed for homogenization and solutionization of the obtained ingot. In the inside of the ingot, an intermetallic compound or the like containing Cu and Mg as main components may be present, which has been generated by concentration through segregation of Mg in the process of solidification. Thus, in order to eliminate or reduce this segregation, intermetallic compound, and the like, a heating treatment of heating the ingot to a temperature of 300°C or higher and 900°C or lower is performed; and thereby, Mg is homogeneously diffused or Mg is solid-solutionized in the matrix, within the ingot. In addition, it is preferable that this homogenizing/solutionizing step S02 is carried out in a non-oxidizing or reducing atmosphere.

When the heating temperature is lower than 300°C, there is a concern that the solutionization may be incomplete, and a large amount of the intermetallic compound containing Cu and Mg as main components may remain in the matrix. On the other hand, when the heating temperature exceeds 900°C, there is a concern that a portion of the copper material may turn into a liquid phase, and the texture and surface state may be nonuniform. Therefore, the heating temperature is set to be in the range of 300°C or higher and 900°C or lower.

Hot working may be performed after the above-described homogenizing/solutionizing step S02, in order to improve the efficiency of rough rolling that will be described below and to homogenize the texture. In this case, the working method is not particularly limited, and for example, rolling, wire drawing, extrusion, groove rolling, forging, and pressing can be employed. In addition, it is preferable that the hot working temperature is set to be in a range of 300°C or higher and 900°C or lower.

(Rough Working Step S03)

In order to work the copper alloy into a predetermined shape, rough working is carried out. The temperature conditions for this rough working step S03 are not particularly limited; however, in order to suppress recrystallization or to improve the dimensional accuracy, it is preferable that the temperature is within the range of -200°C to 200°C, in which cold rolling or warm rolling is carried out, and normal temperature is particularly preferable. The working ratio is preferably 20% or greater, and more preferably 30% or greater. Furthermore, the working method is not particularly limited, and for example, rolling, wire drawing, extrusion, groove rolling, forging, and pressing can be employed.

(Intermediate Heat Treatment Step S04)

After the rough working step S03, a heat treatment is performed for the purpose of thorough solutionizing, and softening for recrystallization and texturizing or improvement of workability. The method of the heat treatment is not particularly limited; however, the heat treatment is performed in a non-oxidizing atmosphere or a reducing atmosphere, preferably at a holding temperature of 400°C or higher and 900°C or lower for a holding time of 10 seconds or longer and 10 hours or shorter. In addition, the cooling method after heating is not particularly limited; however, it is preferable to employ a method such as water quenching or the like in which the cooling rate is 200°C/min or greater.
It is noted that the rough working step S03 and the intermediate heat treatment step S04 may be repeatedly carried out.

(Working Before Finishing Step S05)

In order to work the copper material after the intermediate heat treatment step S04 into a predetermined shape, working before finishing is performed. The temperature conditions for this working before finishing step S05 are not particularly limited; however, it is preferable that the temperature is within the range of -200°C to 200°C, in which cold working or warm working is carried out, in order to suppress recrystallization during working or to suppress softening, and normal temperature is particularly preferable. Furthermore, the working ratio is selected as appropriate such that the shape of the copper material is close to the final shape; however, it is preferable that the working ratio is 5% or greater in order to improve strength by work hardening.
Furthermore, the working method is not particularly limited, and for example, rolling, drawing, extrusion, groove rolling, forging, and pressing can be employed.

(Heat Treatment Before Finishing Step S06)

The plastically-worked material obtained by the working before finishing step S05 is subjected to a heat treatment before finishing, for the purpose of stabilization by fixation of dislocations and rearrangement of dislocations by Mg. It is preferable that the heat treatment temperature is within the range of 100°C or higher and 800°C or lower. It is necessary to set the heat treatment conditions (temperature, time, and cooling rate) such that a significant decrease in the strength due to recrystallization is avoided. For example, it is preferable to maintain the plastically-worked material at 300°C for 1 second or longer and 120 seconds or shorter. It is preferable that this heat treatment is performed in a non-oxidizing atmosphere or a reducing atmosphere.
A method of performing the heat treatment is not particularly limited; however, from an effect of reducing the production cost, a heat treatment using a continuous annealing furnace for a short period of time is preferred. In addition, the above-described working before finishing step S05 and the above-described heat treatment before finishing step S06 may be repeatedly carried out.

(Light Working Step S07)

The plastically-worked material subjected to the heat treatment before finishing step S06 is subjected to plastic working at a light (low) working ratio, in order to develop serrations by further fixation of dislocations and stabilization by Mg. The temperature conditions for this light working step S07 are not particularly limited; however, it is preferable that the temperature is within the range of -200°C to 200°C, in which cold rolling or warm rolling is carried out, and particularly preferably normal temperature, from the viewpoint of suppressing recrystallization or improving the dimensional accuracy.
In addition, in the light working step S07, since the stress relaxation resistance characteristics are deteriorated when the working ratio is set to be high, it is preferable that the total working ratio is set to be in a range of 5% or greater and 50% or less, and the working ratio for one pass is limited to 20% or less. Furthermore, in the case of the light working ratio, it is difficult to uniformly deform the plastically-worked material, which causes deterioration of the sheet shape;

and therefore, it is preferable to perform rolling while applying a tension of 50 MPa or greater in the longitudinal direction.

(Finish Heat Treatment Step S08)

Finally, the plastically-worked material obtained by the light working step S07 is subjected to finish heat treatment, for the purpose of further stabilization by fixation of dislocations and rearrangement of dislocations by Mg. It is preferable that the heat treatment temperature is within the range of 100°C or higher and 800°C or lower. It is necessary to set the heat treatment conditions (temperature, time, and cooling rate) such that a significant decrease in the strength due to recrystallization is avoided. For example, it is preferable to maintain the plastically-worked material at 300°C for 1 second or longer and 120 seconds or shorter. It is preferable that this heat treatment is performed in a non-oxidizing atmosphere or a reducing atmosphere.

A method of performing the heat treatment is not particularly limited; however, from an effect of reducing the production cost, a heat treatment using a continuous annealing furnace for a short period of time is preferred. Furthermore, the light working step S07 and the finish heat treatment step S08 described above may be carried out repeatedly.

In this manner, the copper alloy (copper alloy plastically-worked material) according to the present embodiment is produced. It is noted that the copper alloy plastically-worked material produced by rolling is referred to as a copper alloy rolled sheet.

In a case where the sheet thickness of the copper alloy plastically-worked material is 0.1 mm or greater, the copper alloy plastically-worked material is suitable to be used as a conductor in large-current applications. In addition, by adjusting the sheet thickness of the copper alloy plastically-worked material to 10.0 mm or less, an increase in the load of a press machine can be suppressed, the productivity per unit time can be ensured, and the production cost can be suppressed.

Therefore, it is preferable that the sheet thickness of the copper alloy plastically-worked material (copper alloy rolled material) is within the range of 0.1 mm or greater and 10.0 mm or less.

It is preferable that the lower limit of the sheet thickness of the copper alloy plastically-worked material (copper alloy rolled material) is 0.5 mm or greater, and more preferably 1.0 mm or greater. On the other hand, the upper limit of the sheet thickness of the copper alloy plastically-worked material (copper alloy rolled material) is less than 9.0 mm, and more preferably less than 8.0 mm.

Furthermore, a metal plating layer (for example, Sn plating, Ag plating, Ni plating, Au plating, Pd plating, or Rh plating) may be formed on the surface of the copper alloy plastically-worked material (copper alloy rolled material) according to the present embodiment.

Furthermore, with regard to the copper alloy (copper alloy plastically-worked material) according to the present embodiment, in the case of a rolled material (copper alloy rolled sheet) that has been rolled, when a measurement area of 1000 $\mu$m$^2$ or greater on the RD surface is measured by an EBSD method at a measurement interval of 0.1 $\mu$m step, measurement points at which a CI value analyzed by data analysis software OIM is 0.1 or less are excluded, and analysis is performed, it is preferable that an aspect ratio b/a represented by the major axis a and the minor axis b of the crystal grain size (including twin crystals) is 0.95 or less.

In a case where the aspect ratio b/a represented by the major axis a and the minor axis b of the crystal grain size (including twin crystals) is 0.95 or less, dislocations are sufficiently introduced by rolling, and as these dislocations are stabilized by Mg, it is possible to promote further improvement of the strength, the stress relaxation resistance characteristics, and the elongation.

In the present embodiment, the above-described aspect ratio b/a is more preferably 0.93 or less, and even more preferably 0.90 or less.

The copper alloy according to the present embodiment having the above configuration contains Mg in an amount of 0.10 mass% or greater and 2.6 mass% or less. In the plastic deformation region of a stress-strain curve obtained in a low-speed tensile test at a strain rate of $1.0 \times 10^{-6}$/s, an average value of the period of strain of a saw edge-shaped curve is 0.01% or greater and 1.0% or less, and an average value of the difference in the level of stress of the saw edge-shaped curve is 0.1 MPa or greater and 2 MPa or less. Furthermore, in the plastic deformation region of the stress-strain curve, there are five or more saw edge-shaped curves with a period of strain of 0.01% or greater and 1.0% or less and a difference in the level of stress of 0.1 MPa or greater and 2 MPa or less. Therefore, dislocations are stabilized by Mg, and the stress relaxation resistance characteristics can be improved while maintaining strength. In addition, elongation can be improved, and bendability can be improved.

In addition, with regard to the copper alloy of the present embodiment, in a case where the aspect ratio b/a represented by the major axis a and the minor axis b of the crystal grain size (including twin crystals) is 0.95 or less when a measurement area of 1000 $\mu$m$^2$ or greater is measured by an EBSD method at a measurement interval of 0.1 $\mu$m step, measurement points at which a CI value analyzed by data analysis software OIM is 0.1 or less are excluded, and analysis is performed, dislocations are sufficiently introduced by working, and these dislocations are stabilized by Mg, so that the stress relaxation resistance characteristics can be further improved while maintaining strength, and at the same time, elongation can be improved, while bendability can be further improved.

Furthermore, with regard to the copper alloy according to the present embodiment, in a case where a tensile strength is 350 MPa or greater, the copper alloy has sufficiently high tensile strength, is not easily deformed, and is particularly suitable as a copper alloy for a component for an electronic/electrical device, such as a terminal of a connector, a press fit, or the like, a relay, a lead frame, or a bus bar.

In addition, with regard to the copper alloy of the present embodiment, in a case where when the amount of Mg is designated as A atom%, the electrical conductivity σ (%IACS) satisfies the following relational expression, the added Mg sufficiently forms solid-solutions in the copper matrix, and generation of precipitates including Mg is suppressed. Therefore, bendability can be further improved.

$$\sigma \leq 1.7680 \, / \, (-0.0200 \times A^2 + 0.5769 \times A + 1.7) \times 100.$$

Furthermore, in a case where the copper alloy of the present embodiment further contains P in an amount of 0.0005 mass% or greater and 0.1 mass% or less, it is possible to improve castability, and at the same time, even when P is added, a significant decrease in the electrical conductivity can be suppressed.

In addition, with regard to the copper alloy of the present embodiment, in a case where the electrical conductivity σ (%IACS) satisfies the following relational expression when the amount of Mg is designated as A atom%, the amount of P is designated as B atom%, and the Mg equivalent $A_X$ is expressed as $A_X = (A - 1.5 \times B)$, even when Mg and P are added together and $Mg_3P_2$ is generated in the matrix, the added Mg sufficiently forms solid-solutions in the copper matrix, and the generation of precipitates including Mg is suppressed. Therefore, bendability can be further improved.

$$\sigma \leq 1.7680 \, / \, (-0.0200 \times A_X^2 + 0.5769 \times A_X + 1.7) \times 100.$$

Since the copper alloy plastically-worked material according to the present embodiment is formed of the above-described copper alloy, the copper alloy plastically-worked material is excellent in terms of the electrical conductivity, stress relaxation resistance characteristics, and bendability, and is particularly suitable as a material of a component for an electronic/electrical device, such as a terminal, a bus bar, or a lead frame.

Furthermore, in a case where the copper alloy plastically-worked material according to the present embodiment is produced into a rolled sheet having a thickness within the range of 0.1 mm or greater and 10 mm or less, a component for an electronic/electrical device, such as a terminal, a bus bar, or a lead frame, can be relatively easily molded by subjecting the copper alloy plastically-worked material (rolled sheet) to punching or bending.

In a case where a metal plating layer (for example, Sn plating, Ag plating, Ni plating, Au plating, Pd plating, or Rh plating) is formed on the surface of the copper alloy plastically-worked material according to the present embodiment, the copper alloy plastically-worked material is particularly suitable as a material for a component for an electronic/electrical device, such as a terminal or a bus bar.

Furthermore, since the component for an electronic/electrical device (such as a terminal, a bus bar, or a lead frame) according to the present embodiment is formed of the above-described copper alloy plastically-worked material and copper alloy, the component can exhibit excellent characteristics even in a high-temperature environment.

Thus, the copper alloy, the copper alloy plastically-worked material, and the component for an electronic/electrical device (such as a terminal, a bus bar, or a lead frame) according to the embodiment of the present invention have been described; however, the present invention is not limited thereto and can be appropriately changed to the extent that the technical features of the invention are maintained.

For example, in the above-described embodiment, an example of the method of producing a copper alloy (copper alloy plastically-worked material) has been described; however, the method of producing a copper alloy is not limited to the description of the embodiment, and an existing production method may be selected as appropriate to produce the copper alloy.

[Examples]

Hereinafter, a description will be given for the results of verification experiments carried out to verify the effects of the present invention.

A copper raw material formed of oxygen-free copper (ASTM B152 C10100) having a purity of 99.99 mass% or greater was prepared, and this was charged into a high-purity graphite crucible and subjected to high-frequency induction melting in an atmosphere furnace in an Ar gas atmosphere. Various additive elements were added to the obtained molten copper to prepare the component compositions shown in Table 1, and the molten copper was poured into a carbon mold to produce an ingot. Further, the size of the ingot was adjusted to a thickness of 10 to 30 mm, a width of about 20 mm, and a length of about 100 to 120 mm.

The obtained ingot was subjected to a heating step of heating at a temperature 715°C for 4 hours in an Ar gas atmosphere, and then was subjected to water quenching.

The ingot after the heat treatment was cut, and surface grinding was performed to remove an oxide film. Thereafter, the ingot was cut such that the thickness before rough working was appropriately adjusted to obtain the set final thickness. Next, the ingot was subjected to rough working, intermediate heat treatment, cold rolling before finishing, and heat treatment before finishing under the conditions of the working ratio and temperature described in Tables 2 and 3, and then was subjected to light working (light rolling) and finish heat treatment under the conditions described in Tables 2 and 3; and thereby, strip materials for characteristics evaluation having a sheet thickness shown in Tables 2 and 3 and a width of about 20 mm were produced.

The obtained strip materials for characteristics evaluation were evaluated for the following items.

(Composition Analysis)

A measurement specimen was collected from the obtained ingot, the amount of Mg was measured by inductively coupled plasma optical emission spectrometry, and the amounts of other elements were measured using a glow discharge mass spectrometer (GD-MS).

The measurement was performed by collecting specimens from two sites, namely, the central portion of the specimen and an end portion in the width direction, and a larger amount was defined as the amount of the sample. As a result, it was verified that the component compositions were as shown in Table 1. The item "Mg equivalent" in Table 1 is an Mg equivalent $Ax$, which is a value calculated by the equation: $Ax = (A - 1.5 \times B)$ when the amount of Mg is designated as $A$ atom% and the amount of P is designated as $B$ atom%.

(Low-speed Tensile Test)

A No. 13B test piece specified in JIS Z 2201 was collected from a strip material for characteristics evaluation, and a low-speed tensile test at a strain rate of $1.0 \times 10^{-6}$/s was performed. Tensile strength and elongation were measured by this low-speed tensile test.

It should be noted that the test piece was collected such that the tensile direction of the tensile test was parallel to the rolling direction of the strip material for characteristics evaluation.

Then, a load-elongation curve obtained in the low-speed tensile test was analyzed to check the presence or absence of a saw edge-shaped curve (serration).

With the obtained data, the presence or absence of a saw edge-shaped curve (periodical stress fluctuations) in the curve after 0.2 % yield strength $\sigma_{0.2}$ (plastic deformation region) measured by the offset method of JIS Z 2241 was checked. In the item "Presence or absence" in Tables 4 and 5, "Yes" was described in a case where a saw edge-shaped curve existed even when the period of strain and the difference in the level of stress were outside the ranges described in the embodiment.

Then, for those in which these saw edge-shaped curves were recognized, the average value of the period of strain of the saw edge-shaped curve, the average value of the difference in the level of stress of the saw edge-shaped curve, and the number of the saw edge-shaped curves in the plastic deformation region are described in Tables 4 and 5.

The period of strain of each of the saw edge-shaped curves in the plastic deformation region was measured, the sum of those values was divided by the number of the saw edge-shaped curves to calculate an average value, and the average value was taken as the average value of the period of strain of the saw edge-shaped curve. Similarly, the difference in the level of stress of each of the saw edge-shaped curves in the plastic deformation region was measured, the sum of the values was divided by the number of the saw edge-shaped curves to calculate an average value, and the average value was taken as the average value of the difference in the level of stress of the saw edge-shaped curve.

In addition, the number of the saw edge-shaped curves is the number of saw edge-shaped curves having a period of strain of 0.01% or greater and 1.0% or less and a difference in the level of stress of 0.1 MPa or greater and 2 MPa or less in the plastic deformation region.

(Aspect Ratio)

A surface perpendicular to the rolling direction of the strip material for characteristics evaluation, that is, a roll direction (RD) surface, was subjected to mechanical polishing using a waterproof abrasive paper and diamond abrasive grains, and then to finish-polishing using a colloidal silica solution. Then, using an EBSD measuring device (Quanta FEG 450 manufactured by FEI Company, OIM Data Collection manufactured by EDAX/TSL, Inc. (currently AMETEK, Inc.)), and analysis software (OIM Data Analysis ver. 5.3 manufactured by EDAX/TSL, Inc. (currently AMETEK, Inc.)), analysis of the misorientation of each crystal grain (including twin crystals) was performed over a measurement area of

1000 $\mu m^2$ or greater at an accelerating voltage of electron beam of 20 kV and a measurement interval of 0.1 $\mu m$ step, except for measurement points at which the CI value was 0.1 or less. A boundary between adjacent measurement points where the misorientation between the measurement points was 15° or greater was defined as a grain boundary, and an aspect ratio represented by b/a when a major axis of the crystal grain size of each crystal grain was designated as a and a minor axis thereof was designated as b, was measured. In addition, in the measurement of the aspect ratio, regarding the grain size on the EBSD, a grain tolerance angle was set to 5° and a minimum grain size was set to 2 pixels for measurement. An average value of the aspect ratios of the crystal grains was calculated, and the average value was designated as the aspect ratio of the specimen.

(Electrical Conductivity)

Test pieces having a width of 10 mm and a length of 60 mm were collected from a strip material for characteristics evaluation, and the electric resistance was determined according to a 4-terminal method. The dimensions of each test piece were measured using a micrometer, and the volume of the test piece was calculated. Then, the electrical conductivity was calculated from the measured electric resistance value and the volume. It is noted that each test piece was collected such that the longitudinal direction of the test piece was parallel to the rolling direction of the strip material for characteristics evaluation.

(Stress Relaxation Resistance Characteristics)

A stress relaxation resistance characteristics test was carried out by measuring the residual stress ratio after loading a stress according to a method in conformity with a cantilever screw type in Japan Copper and Brass Association Technical Standard JCBA-T309:2004 and holding the test piece at a temperature of 150°C for 1000 hours.

According to the test method, test pieces (10 mm in width) were collected from each strip material for characteristics evaluation in a direction parallel to the rolling direction, the initial deflection displacement was set to 2 mm such that the maximum surface stress of each test piece was 80% of the yield strength, and the span length was adjusted. The maximum surface stress was determined according to the following equation.

$$\text{Maximum surface stress (MPa)} = 1.5\, Et\delta_0 / L_s^2$$

E, t, $\delta_0$, and $L_s$ indicate the following values.
E: Young's modulus (MPa)
t: Thickness (mm) of specimen
$\delta_0$: Initial deflection displacement (mm)
$L_s$: Span length (mm)

The residual stress ratio was measured from a bending tendency formed after holding the test piece at a temperature of 150°C for 1000 hours, and the stress relaxation resistance characteristics were evaluated. The residual stress ratio was calculated using the following equation.

$$\text{Residual stress ratio (\%)} = (1 - \delta_t / \delta_0) \times 100$$

$\delta_t$ and $\delta_0$ indicate the following values.
$\delta_t$: (Permanent deflection displacement (mm) after holding at 150°C for 1000 hours) - (permanent deflection displacement (mm) after holding at normal temperature for 24 hours)
$\delta_0$: Initial deflection displacement (mm)

(Bendability)

Bending was performed according to four test methods of the Japan Copper and Brass Association Technical Standard JBMA-T307:2007. A plurality of test pieces that were 10 mm in width and 30 mm in length were collected from a strip material for characteristics evaluation such that the rolling direction and the longitudinal direction of the test piece were parallel to each other, and a W bend test was performed using a W type jig having a bending angle of 90 degrees and a bending radius of 0.5 mm.

Then, the outer peripheral portion of the bent portion was visually checked, and a case in which breaking occurred was determined as "× (poor)", while a case in which breaking occurred only partially was determined as "Δ" (fair).

A case in which breaking did not occur and only fine cracks were generated, was determined as "o" (good), and a case in which breaking or fine cracks could not be identified was determined as "@" (excellent).

[Table 1]

| | | Component composition (mass ratio) | | | Component composition (atomic ratio) | | |
|---|---|---|---|---|---|---|---|
| | | Mg % | P % | Cu | Mg % | P % | Mg equivalent |
| Invention Example | 1 | 0.11 | 0.0007 | Balance | 0.29 | 0.002 | 0.28 |
| | 2 | 1.60 | 0.0040 | Balance | 4.08 | 0.010 | 4.06 |
| | 3 | 1.20 | 0.0030 | Balance | 3.08 | 0.008 | 3.07 |
| | 4 | 0.27 | 0.0015 | Balance | 0.70 | 0.004 | 0.70 |
| | 5 | 2.30 | 0.0010 | Balance | 5.80 | 0.003 | 5.79 |
| | 6 | 0.70 | 0.0100 | Balance | 1.81 | 0.010 | 1.77 |
| | 7 | 1.54 | 0.0007 | Balance | 3.93 | 0.002 | 3.93 |
| | 8 | 0.50 | 0.0005 | Balance | 1.30 | 0.001 | 1.29 |
| | 9 | 0.75 | 0.0005 | Balance | 1.94 | 0.001 | 1.94 |
| | 10 | 0.40 | 0.0300 | Balance | 1.04 | 0.078 | 0.92 |
| | 11 | 1.00 | 0.0800 | Balance | 2.57 | 0.206 | 2.26 |
| | 12 | 2.10 | 0.0900 | Balance | 5.31 | 0.227 | 4.96 |
| | 13 | 2.57 | 0.0600 | Balance | 6.45 | 0.151 | 6.22 |
| | 14 | 1.50 | 0.0080 | Balance | 3.83 | 0.020 | 3.80 |
| | 15 | 1.90 | 0.0200 | Balance | 4.82 | 0.051 | 4.74 |
| | 16 | 1.63 | 0.0000 | Balance | 4.15 | 0.000 | 4.15 |
| Comparative Example | 1 | 3.00 | 0.0008 | Balance | 7.48 | 0.002 | 7.48 |
| | 2 | 0.60 | 0.2000 | Balance | 1.55 | 0.517 | 0.78 |
| | 3 | 0.30 | 0.0100 | Balance | 0.78 | 0.026 | 0.74 |
| | 4 | 0.60 | 0.0800 | Balance | 1.55 | 0.207 | 1.24 |
| | 5 | 2.10 | 0.0010 | Balance | 5.31 | 0.003 | 5.31 |
| | 6 | 0.06 | 0.0100 | Balance | 0.16 | 0.026 | 0.12 |
| | 7 | 0.40 | 0.0300 | Balance | 1.04 | 0.078 | 0.92 |

[Table 2]

| | | Production step | | | | | | | | | | | Thickness mm |
|---|---|---|---|---|---|---|---|---|---|---|---|---|---|
| | | Homogenizing/ solutionizing | Rough working | Intermediate heat treatment | | Working before finishing | Heat treatment before finishing | | Light working step | | Finish heat treatment | | |
| | | Temperature °C | Rolling ratio % | Temperature °C | Time sec. | Rolling ratio % | Temperature °C | Time sec. | Total rolling ratio % | Maximum rolling ratio for one pass | Temperature °C | Time sec. | |
| Invention Example | 1 | 715 | 60 | 600 | 30 | 60 | 350 | 30 | 20 | 9 | 300 | 30 | 3.0 |
| | 2 | 715 | 30 | 650 | 60 | 99 | 350 | 15 | 15 | 4 | 300 | 30 | 0.1 |
| | 3 | 715 | 80 | 550 | 60 | 10 | 250 | 40 | 5 | 2 | 380 | 5 | 3.5 |
| | 4 | 715 | 90 | 600 | 60 | 50 | 350 | 5 | 20 | 9 | 320 | 40 | 1.0 |
| | 5 | 715 | 40 | 650 | 40 | 95 | 250 | 60 | 50 | 19 | 280 | 30 | 0.3 |
| | 6 | 715 | 90 | 625 | 180 | 40 | 280 | 30 | 20 | 8 | 280 | 40 | 1.0 |
| | 7 | 715 | 95 | 625 | 60 | 80 | 300 | 45 | 10 | 10 | 250 | 30 | 0.2 |
| | 8 | 715 | 90 | 575 | 180 | 70 | 250 | 60 | 20 | 17 | 370 | 5 | 0.5 |

EP 4 417 722 A1

EP 4 417 722 A1

[Table 2 (Continued)]

| | | Production step | | | | | | | | | | | | Thickness mm |
| | | Homogenizing/ solutionizing | Rough working | Intermediate heat treatment | | Working before finishing | Heat treatment before finishing | | Light working step | | Finish heat treatment | | |
| | | Temperature °C | Rolling ratio % | Temperature °C | Time sec. | Rolling ratio % | Temperature °C | Time sec. | Total rolling ratio % | Maximum rolling ratio for one pass | Temperature °C | Time sec. | |
|---|---|---|---|---|---|---|---|---|---|---|---|---|---|
| Invention Example | 9 | 715 | 90 | 625 | 60 | 65 | 300 | 20 | 35 | 14 | 300 | 30 | 0.6 |
| | 10 | 715 | 94 | 675 | 60 | 40 | 320 | 30 | 30 | 7 | 400 | 5 | 0.5 |
| | 11 | 715 | 95 | 650 | 40 | 60 | 250 | 30 | 50 | 13 | 350 | 20 | 0.2 |
| | 12 | 715 | 65 | 600 | 240 | 80 | 250 | 20 | 40 | 8 | 350 | 15 | 0.8 |
| | 13 | 715 | 90 | 700 | 120 | 85 | 220 | 50 | 30 | 15 | 300 | 20 | 0.2 |
| | 14 | 715 | 20 | 550 | 120 | 35 | 300 | 40 | 10 | 2 | 220 | 20 | 9.8 |
| | 15 | 715 | 80 | 700 | 30 | 95 | 350 | 20 | 40 | 18 | 350 | 20 | 0.1 |
| | 16 | 715 | 90 | 650 | 40 | 75 | 250 | 30 | 20 | 20 | 300 | 40 | 0.4 |

[Table 3]

| | | Production step | | | | | | | | | | | | Thickness mm |
|---|---|---|---|---|---|---|---|---|---|---|---|---|---|---|
| | | Homogenizing/ solutionizing | Rough working | Intermediate heat treatment | | Working before finishing | Heat treatment before finishing | | Light working step | | Finish heat treatment | | |
| | | Temperature °C | Rolling ratio % | Temperature °C | Time sec. | Rolling ratio % | Temperature °C | Time sec. | Total rolling ratio % | Maximum rolling ratio for one pass | Temperature °C | Time sec. | |
| Comparative Example | 1 | 715 | 95 | 715 | 90 | 70 | 280 | 30 | 35 | 35 | 360 | 45 | 0.2 |
| | 2 | 715 | 80 | 350 | 180 | 50 | 250 | 20 | 10 | 10 | 270 | 5 | 1.8 |
| | 3 | 715 | 60 | 600 | 60 | 30 | 300 | 15 | 40 | 9 | 250 | 10 | 2.0 |
| | 4 | 715 | 70 | 400 | 200 | 50 | 350 | 10 | 20 | 14 | 250 | 5 | 2.0 |
| | 5 | 715 | 80 | 650 | 30 | 3 | 350 | 60 | 3 | 12 | 350 | 60 | 4.0 |
| | 6 | 715 | 70 | 500 | 90 | 50 | 360 | 30 | 20 | 8 | 360 | 30 | 2.4 |
| | 7 | 715 | 94 | 675 | 60 | 40 | 320 | 30 | 50 | 30 | 400 | 5 | 0.4 |

[Table 4]

| | | Evaluation | | | | | | | | |
|---|---|---|---|---|---|---|---|---|---|---|
| | | Saw edge-shaped curve | | | Aspect ratio | Electrical conductivity IACS% | Strength MPa | Elongation % | Residual stress ratio % | Bendability |
| | | Presence or absence | Average value of period % | Average value of difference in level MPa | Number of pieces | | | | | | |
| Invention Example | 1 | Present | 0.70 | 0.30 | 13 | 0.30 | 92 | 400 | 7 | 64 | ○ |
| | 2 | Present | 0.03 | 1.00 | 34 | 0.01 | 41 | 840 | 4 | 70 | ○ |
| | 3 | Present | 0.20 | 1.20 | 46 | 0.85 | 48 | 380 | 10 | 63 | ○ |
| | 4 | Present | 0.30 | 0.40 | 20 | 0.40 | 81 | 450 | 10 | 80 | ○ |
| | 5 | Present | 0.03 | 1.90 | 51 | 0.03 | 33 | 800 | 3 | 74 | ○ |
| | 6 | Present | 0.30 | 0.30 | 25 | 0.50 | 62 | 450 | 9 | 86 | ○ |
| | 7 | Present | 0.06 | 1.40 | 66 | 0.20 | 42 | 650 | 9 | 82 | ○ |
| | 8 | Present | 0.20 | 0.90 | 28 | 0.30 | 69 | 680 | 7 | 77 | ○ |

EP 4 417 722 A1

[Table 4 (Continued)]

| | | Evaluation | | | | | | | | | |
| | | Saw edge-shaped curve | | | | | | | | | |
| | | Presence or absence | Average value of period % | Average value of difference in level MPa | Number of pieces | Aspect ratio | Electrical conductivity IACS% | Strength MPa | Elongation % | Residual stress ratio % | Bendability |
| Invention Example | 9 | Present | 0.08 | 0.60 | 55 | 0.20 | 59 | 700 | 8 | 87 | ○ |
| | 10 | Present | 0.40 | 0.10 | 10 | 0.40 | 76 | 600 | 10 | 84 | ○ |
| | 11 | Present | 0.90 | 0.60 | 6 | 0.20 | 56 | 630 | 6 | 79 | ○ |
| | 12 | Present | 0.10 | 1.50 | 30 | 0.15 | 37 | 700 | 4 | 74 | ○ |
| | 13 | Present | 0.04 | 1.60 | 28 | 0.10 | 31 | 820 | 3 | 80 | ○ |
| | 14 | Present | 0.80 | 0.30 | 11 | 0.60 | 43 | 410 | 7 | 71 | ○ |
| | 15 | Present | 0.04 | 1.80 | 40 | 0.03 | 37 | 920 | 3 | 71 | ○ |
| | 16 | Present | 0.05 | 1.50 | 57 | 0.20 | 40 | 680 | 7 | 81 | ○ |

EP 4 417 722 A1

[Table 5]

| | | Evaluation | | | | | | | | | |
|---|---|---|---|---|---|---|---|---|---|---|---|
| | | Saw edge-shaped curve | | | | | | | | | |
| | | Presence or absence | Average value of period % | Average value of level difference MPa | Number of pieces | Aspect ratio | Electrical conductivity IACS% | Strength MPa | Elongation % | Residual stress ratio % | Bendability |
| Comparative Example | 1 | Present | 0.10 | 2.10 | 52 | 0.20 | 32 | 640 | 7 | 83 | × |
| | 2 | Absent | - | - | 0 | 0.50 | 79 | 600 | 5 | 68 | × |
| | 3 | Present | 1.20 | 0.70 | 10 | 0.30 | 80 | 580 | 2 | 52 | ○ |
| | 4 | Present | 0.90 | 0.04 | 9 | 0.40 | 70 | 640 | 3 | 74 | × |
| | 5 | Absent | - | - | 0 | 0.95 | 35 | 330 | 12 | 88 | ○ |
| | 6 | Absent | - | - | 0 | 0.40 | 96 | 320 | 8 | 58 | × |
| | 7 | Present | 0.70 | 0.07 | 3 | 0.30 | 75 | 650 | 8 | 57 | ○ |

**EP 4 417 722 A1**

In Comparative Example 1, the amount of Mg exceeded the range of the present embodiment, and the electrical conductivity was as low as 32%IACS. In addition, in the plastic deformation region of a stress-strain curve obtained in a low-speed tensile test at a strain rate of $1.0 \times 10^{-6}$/s, the average value of the difference in the level of stress in a saw edge-shaped curve was higher than the range of the embodiment, and bendability was inferior.

In Comparative Example 2, in the plastic deformation region of a stress-strain curve obtained in the low-speed tensile test at a strain rate of $1.0 \times 10^{-6}$/s, the saw edge-shaped curve (serration) specified in the present embodiment was not identified, and bendability was inferior.

In Comparative Example 3, in the plastic deformation region of a stress-strain curve obtained in the low-speed tensile test at a strain rate of $1.0 \times 10^{-6}$/s, the average value of the period of strain of the saw edge-shaped curve was higher than the range of the embodiment, the elongation was 2%, and the residual stress ratio was as low as 52%.

In Comparative Example 4, in the plastic deformation region of a stress-strain curve obtained in the low-speed tensile test at a strain rate of $1.0 \times 10^{-6}$/s, the average value of the difference in the level of stress of the saw edge-shaped curve was lower than the range of the embodiment, and bendability was inferior.

In Comparative Example 5, in the plastic deformation region of a stress-strain curve obtained in the low-speed tensile test at a strain rate of $1.0 \times 10^{-6}$/s, the saw edge-shaped curve (serration) specified in the present embodiment was not identified, and the tensile strength was as low as 330 MPa.

In Comparative Example 6, the amount of Mg was smaller than the range of the present embodiment, the residual stress ratio was 58%, and the stress relaxation resistance characteristics were inferior. In addition, in the plastic deformation region of a stress-strain curve obtained in the low-speed tensile test at a strain rate of $1.0 \times 10^{-6}$/s, the saw edge-shaped curve (serration) specified in the present embodiment was not identified, and the tensile strength was as low as 320 MPa.

In Comparative Example 7, in the plastic deformation region of a stress-strain curve obtained in the low-speed tensile test at a strain rate of $1.0 \times 10^{-6}$/s, the number of saw edge-shaped curves (serrations) having a period of strain of 0.01% or greater and 1.0% or less and a difference in the level of stress of 0.1 MPa or greater and 2 MPa or less, was 3, which was less than 5. In addition, the average value of the difference in the level of stress of the saw edge-shaped curve was smaller than the range of the embodiment. Therefore, the residual stress ratio was as low as 57%.

In contrast, in Invention Examples 1 to 16, it was verified that the tensile strength and the stress relaxation resistance characteristics were improved in a well-balanced manner. In addition, bendability was also sufficiently excellent.

As described above, according to the Invention Examples, it was verified that a copper alloy having high strength, excellent stress relaxation resistance characteristics, and excellent bendability can be provided.

[Industrial Applicability]

The copper alloy (copper alloy plastically-worked material) of the present embodiment is suitably applied to a component for an electronic/electrical device, such as a terminal, a bus bar, or a lead frame.

**Claims**

1. A copper alloy having a composition comprising Mg in an amount of 0.10 mass% or greater and 2.6 mass% or less, with a balance being Cu and inevitable impurities,
   wherein in a plastic deformation region of a stress-strain curve obtained in a low-speed tensile test at a strain rate of $1.0 \times 10^{-6}$/s, an average value of a period of a strain of a saw edge-shaped curve is 0.01% or greater and 1.0% or less, an average value of a difference in level of stress of the saw edge-shaped curve is 0.1 MPa or greater and 2 MPa or less, and there are five or more saw edge-shaped curves with a period of strain of 0.01% or greater and 1.0% or less and a difference in the level of stress of 0.1 MPa or greater and 2 MPa or less.

2. The copper alloy according to Claim 1,
   wherein when a measurement area of 1000 $\mu$m$^2$ or greater is measured by an EBSD method at a measurement interval of 0.1 $\mu$m step, measurement points at which a CI value analyzed by data analysis software OIM is 0.1 or less are excluded, and analysis is performed, an aspect ratio b/a represented by a major axis a and a minor axis b of a crystal grain size (including twin crystals) is 0.95 or less.

3. The copper alloy according to Claim 1 or 2,
   wherein a tensile strength is 350 MPa or greater.

4. The copper alloy according to Claim 1 or 2,

21

wherein when an amount of Mg is designated as A atom%, electrical conductivity σ (%IACS) satisfies the following relational expression,

$$\sigma \leq 1.7680/(-0.0200 \times A^2 + 0.5769 \times A + 1.7) \times 100.$$

5. The copper alloy according to Claim 1 or 2,
wherein the composition further comprises P in an amount of 0.0005 mass% or greater and 0.1 mass% or less.

6. The copper alloy according to Claim 5,
wherein when an amount of Mg is designated as A atom%, an amount of P is designated as B atom%, and an Mg equivalent Ax is expressed as Ax = (A - 1.5 × B), electrical conductivity σ (%IACS) satisfies the following relational expression,

$$\sigma \leq 1.7680 / (-0.0200 \times A_X^2 + 0.5769 \times A_X + 1.7) \times 100.$$

7. A copper alloy plastically-worked material comprising:
the copper alloy according to Claim 1 or 2.

8. The copper alloy plastically-worked material according to Claim 7,
wherein the copper alloy plastically-worked material is a rolled sheet having a thickness within a range of 0.1 mm or greater and 10 mm or less.

9. The copper alloy plastically-worked material according to Claim 7,
wherein the copper alloy plastically-worked material includes a metal plating layer on a surface.

10. A component for an electronic/electrical device, comprising:
the copper alloy plastically-worked material according to Claim 7.

11. A terminal comprising:
the copper alloy plastically-worked material according to Claim 7.

12. A bus bar comprising:
the copper alloy plastically-worked material according to Claim 7.

13. A lead frame comprising:
the copper alloy plastically-worked material according to Claim 7.

## FIG. 1A

STRAIN RATE $\varepsilon = 1.0 \times 10^{-6}/\text{sec}$

## FIG. 1B

ENLARGED VIEW OF X

# FIG. 2

```
┌─────────────────────────────────┐ ⌒S01
│    MELTING AND CASTING STEP     │
└─────────────────────────────────┘
                 │
                 ▼
(      INGOT      )
                 │
                 ▼
┌─────────────────────────────────┐ ⌒S02
│  HOMOGENIZING/SOLUTIONIZING STEP │
└─────────────────────────────────┘
                 │
                 ▼
┌─────────────────────────────────┐ ⌒S03
│       ROUGH WORKING STEP        │
└─────────────────────────────────┘
                 │
                 ▼
┌─────────────────────────────────┐ ⌒S04
│  INTERMEDIATE HEAT TREATMENT STEP │
└─────────────────────────────────┘
                 │
                 ▼
┌─────────────────────────────────┐ ⌒S05
│   WORKING BEFORE FINISHING STEP  │
└─────────────────────────────────┘
                 │
                 ▼
┌─────────────────────────────────┐ ⌒S06
│      HEAT TREATMENT BEFORE       │
│          FINISHING STEP          │
└─────────────────────────────────┘
                 │
                 ▼
┌─────────────────────────────────┐ ⌒S07
│       LIGHT WORKING STEP        │
└─────────────────────────────────┘
                 │
                 ▼
┌─────────────────────────────────┐ ⌒S08
│    FINISH HEAT TREATMENT STEP    │
└─────────────────────────────────┘
                 │
                 ▼
(    COPPER ALLOY    )
```

24

## INTERNATIONAL SEARCH REPORT

| International application No. |
|---|
| **PCT/JP2022/038028** |

### A. CLASSIFICATION OF SUBJECT MATTER

***C22C 9/00***(2006.01)i; ***C22F 1/00***(2006.01)i; ***C22F 1/08***(2006.01)i

FI: C22C9/00; C22F1/08 B; C22F1/00 612; C22F1/00 613; C22F1/00 623; C22F1/00 630A; C22F1/00 630K; C22F1/00 650A; C22F1/00 661A; C22F1/00 681; C22F1/00 682; C22F1/00 683; C22F1/00 685A; C22F1/00 685Z; C22F1/00 686A; C22F1/00 691B; C22F1/00 691C; C22F1/00 691Z; C22F1/00 692A; C22F1/00 694A; C22F1/00 694B

According to International Patent Classification (IPC) or to both national classification and IPC

### B. FIELDS SEARCHED

Minimum documentation searched (classification system followed by classification symbols)

C22C9/00; C22F1/00; C22F1/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-114464 A (FURUKAWA ELECTRIC CO LTD) 26 June 2014 (2014-06-26) | 1-13 |
| A | WO 2013/150627 A1 (MITSUBISHI SHINDOH CO., LTD.) 10 October 2013 (2013-10-10) | 1-13 |
| A | JP 5-311283 A (MITSUBISHI SHINDOH CO., LTD.) 22 November 1993 (1993-11-22) | 1-13 |
| A | WO 2014/196563 A1 (NGK INSULATORS LTD) 11 December 2014 (2014-12-11) | 1-13 |
| A | JP 2016-79472 A (DOWA METALTECH KK) 16 May 2016 (2016-05-16) | 1-13 |
| P, A | JP 2022-025645 A (DOWA METALTECH KK) 10 February 2022 (2022-02-10) | 1-13 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/038028**

| Patent document cited in search report | | | Publication date (day/month/year) | Patent family member(s) | | | Publication date (day/month/year) |
|---|---|---|---|---|---|---|---|
| JP | 2014-114464 | A | 26 June 2014 | (Family: none) | | | |
| WO | 2013/150627 | A1 | 10 October 2013 | US | 2014/0209221 | A1 | |
| | | | | EP | 2835433 | A1 | |
| | | | | CN | 103502486 | A | |
| | | | | KR | 10-2014-0145062 | A | |
| JP | 5-311283 | A | 22 November 1993 | (Family: none) | | | |
| WO | 2014/196563 | A1 | 11 December 2014 | US | 2016/0083826 | A1 | |
| | | | | EP | 3006588 | A1 | |
| | | | | CN | 105264105 | A | |
| | | | | KR | 10-2016-0014635 | A | |
| JP | 2016-79472 | A | 16 May 2016 | (Family: none) | | | |
| JP | 2022-025645 | A | 10 February 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021167385 A

- JP 2016056414 A